Europäisches Patentamt

European Patent Office

Office européen des brevets

(11) Veröffentlichungsnummer: **0 689 118 A2**

# (12) EUROPÄISCHE PATENTANMELDUNG

(21) Anmeldenummer: 95109450.7

(51) Int. Cl.⁶: **G05F 1/59**, H02M 3/28

(22) Anmeldetag: **19.06.95**

(30) Priorität: **24.06.94 DE 4422262**

(43) Veröffentlichungstag der Anmeldung:
**27.12.95 Patentblatt 95/52**

(84) Benannte Vertragsstaaten:
**AT BE CH DE DK ES FR GB GR IE IT LI NL PT SE**

(71) Anmelder: **SIEMENS AKTIENGESELLSCHAFT**
**Wittelsbacherplatz 2**
**D-80333 München (DE)**

(72) Erfinder: **Kramer, Karl-Heinz**
**Moosbauerweg 62**
**D-82515 Wolfratshausen (DE)**

(54) **Schaltungsanordnung zur Erzeugung einer konstanten Ausgangsspannung**

(57) Schaltungsanordnung zur Erzeugung einer konstanten Ausgangsspannung (U2), mit einer ausgangsseitigen Entkopplungsdiode (17) und mit einer Anordnung (20) zur Istwertbildung, die an den Ausgang der Schaltungsanordnung angeschlossen ist. Um bei hoher Genauigkeit der Ausgangsspannung (U2) zu verhindern, daß am Verbraucher (26) auftretende, anderweitig an den Verbraucher (26) gelegte Spannungen den Regler zum Sperren der Schaltungsanordnung veranlassen, enthält die Anordnung (20) zur Istwertbildung zwei Transistorstufen mit komplementären Transistoren (15, 11). Die Schaltungsanordnung ist besonders zur redundanten Speisung von Einrichtungen der elektrischen Nachrichtenübertragungstechnik geeignet.

EP 0 689 118 A2

Die Erfindung bezieht sich auf eine wie im Oberbegriff des Patentanspruchs 1 angegebene Schaltungsanordnung zur Erzeugung einer konstanten Ausgangsspannung.

Eine derartige Schaltungsanordnung ist bereits aus der DE-A1 92 114 237 bekannt. Die genannte Druckschrift beschreibt eine Anordnung mit zwei gleichartigen Umrichtern, die über Entkopplungsdioden eine gemeinsame Last speisen. Jeder der beiden Umrichter ist in der Lage, die Last allein zu versorgen. Der Umrichter weist jeweils einen Regler zur Regelung der Ausgangsspannung auf einen konstanten Wert auf. Der Spannungsregler arbeitet in dem Sinne, daß die Abweichung einer von einer Anordnung zur Istwertbildung abgegebenen Istwertspannung von einer Referenzspannung möglichst minimiert wird. An der gemeinsamen Last liegt ein Spannungsteiler, mit dessen Hilfe der Istwert der Ausgangsspannung erfaßt wird.

Um bei hoher Genauigkeit der Ausgangsspannung zu verhindern, daß am Verbraucher auftretende, anderweitig an den Verbraucher gelegte Spannungen den Regler zum Sperren der Schaltungsanordnung veranlassen, liegt ein Bezugspotentialanschluß des Reglers auf der einen und der Spannungsteiler auf der anderen Seite der Entkopplungsdiode. Als Regler dient ein integrierter Schaltkreis, der - bezogen auf seinen Bezugspotentialanschluß - positive Istwertspannungen verarbeitet. Der Pluspol des Ausgangs der Schaltungsanordnung liegt an Bezugspotential.

Man kann andererseits die Anordnung zur Mischwertbildung so ausbilden, daß der Istwert für den Regler als Mischwert der Spannung vor und nach der Entkopplungsdiode gebildet wird. Wird eine kleine Toleranz der Ausgangsspannung gefordert, so muß der Anteil der Spannung nach der Entkopplungsdiode überwiegen. In diesem Fall sperrt jedoch das zuerst aktive Stromversorgungsgerät das andere. Wählt man zur Vermeidung dieses Problems das Mischverhältnis der Meßwerte vor und nach der Entkopplungsdiode nur als 1:1, so läßt sich nur eine begrenzte Genauigkeit der Verbraucherspannung erreichen, da der Spannungsabfall an der Entkopplungsdiode stark von der Temperatur und dem Laststrom abhängt.

Aufgabe der Erfindung ist es daher, eine Schaltungsanordnung zur Erzeugung einer konstanten Ausgangsspannung, aus der sich ein elektrischer Verbraucher über eine Entkopplungsdiode speisen läßt, so auszubilden, daß bei vergleichsweise hoher Genauigkeit der zur Verfügung zu stellenden Spannung anderweitig an den Verbraucher gelegte Spannungen den Regler nicht zum Sperren der Schaltungsanordnung veranlassen und daß als Bezugspotential der Minuspol des Ausgangs der Schaltungsanordnung dient.

Gemäß der Erfindung wird die Schaltungsanordnung zur Lösung dieser Aufgabe in der im kennzeichnenden Teil des Patentanspruchs 1 angegebenen Weise ausgebildet.

Der zwischen den Ausgangsanschlüssen der Schaltungsanordnung liegende ohmsche Spannungsteiler kann dabei unmittelbar an die Ausgangsanschlüsse angeschlossen oder über eine eigene Meßleitung unmittelbar mit dem zu speisenden elektrischen Verbraucher, d.h. über eine zum Verbraucher führende Anschlußleitung mittelbar mit den Ausgangsanschlüssen der Schaltungsanordnung verbunden sein. Die Schaltungsanordnung kann zunächst allein zur Speisung des elektrischen Verbrauchers dienen.

Eine derartige Anordnung ist dazu geeignet, ohne besondere Maßnahmen durch eine weitere gleichartige Schaltungsanordnung ergänzt zu werden, so daß sich eine Einrichtung zur redundanten Speisung des Verbrauchers ergibt.

Durch die erfindungsgemäßen Maßnahmen ergibt sich eine zur redundanten Speisung geeignete Schaltungsanordnung mit einer zum Pluspol des Ausgangs führenden Entkopplungsdiode, die bei vergleichsweise hoher Genauigkeit der erzeugten Konstantspannung eine Entkopplung des Reglers von anderweitig an den Verbraucher gelegten Spannungen gewährleistet. Ein weiterer Vorteil besteht darin, daß sich sowohl für die zum Pluspol des Ausgangs führende Entkopplungsdiode als auch für die Anordnung zur Istwertbildung eine besonders weitgehende Temperaturkompensation erzielen läßt.

Vorteilhafte Ausgestaltungen der Erfindung, mit denen sich die Kompensation optimieren läßt, gehen aus den Ansprüchen 2 und 3 hervor. In Anspruch 4 ist eine zweckmäßige Weiterbildung im Zusammenhang mit der Weiterleitung der erzeugten Stellspannung angegeben.

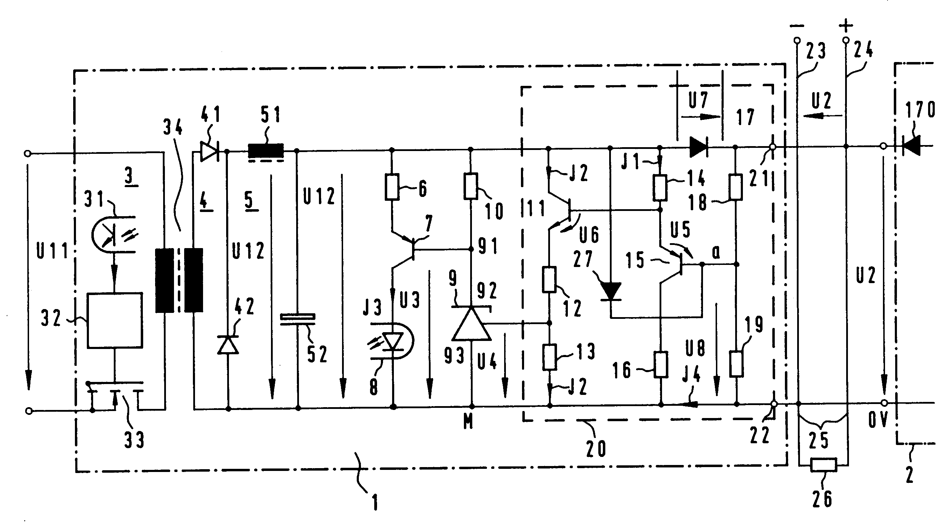

Die Erfindung wird anhand des in der Figur dargestellten Ausführungsbeispieles naher erläutert.

Die Figur zeigt eine Einrichtung zur redundanten Speisung eines elektrischen Verbrauchers über zwei Entkopplungsdioden.

Bei der in der Figur gezeigten Einrichtung liegt der elektrische Verbraucher 26 an der Sammelschiene 25. Die Sammelschiene 25 liegt an den Ausgängen der beiden Stromversorgungsgeräte 1 und 2. Beide Stromversorgungsgeräte 1 und 2 sind jeweils allein in der Lage, den Verbraucher 26 zu speisen. Auf diese Weise ergibt sich für den Verbraucher 26 eine redundante Stromversorgung.

Die Hauptstromkreise der Stromversorgungsgeräte 1 und 2 enthalten jeweils in dem zum Pluspol 24 der Sammelschiene 25 führenden Speisestrompfad eine Entkopplungsdiode 17 bzw. 170. Beide Stromversorgungsgeräte 1 und 2 sind in gleicher Weise aufgebaut. Nähere Einzelheiten sind daher in der Figur nur zu einem der beiden Stromversorgungsgeräte, und zwar zum Stromversorgungsgerät 1 dargestellt.

2

Der eingangsseitige Hauptstromkreis verläuft vom Eingang für die Gleichspannung U11 über die Primärwicklung des Transformators 34 und den dazu in Serie liegenden Leistungsschalter 33, der das Stellglied der Regelstrecke ist. Der Leistungsschalter 33 wird mittels der Steuerschaltung 32 gesteuert, die an den Fototransistor 31 des Optokopplers 8, 31 angeschlossen ist.

Der ausgangsseitige Hauptstromkreis verlauft vom Ausgangsanschluß 22 über die Sekundärwicklung des Transformators 34, die Gleichrichterdiode 41, die Drossel 51 und die Entkopplungsdiode 17 zum Ausgangsanschluß 21. Im Gleichrichterteil 4 ist in einem auf die Gleichrichterdiode 41 folgenden Querzweig die Freilaufdiode 42 angeordnet. Im Siebglied 5 befindet sich in einem auf die Drossel 51 folgenden Querzweig der Speicherkondensator 52, an dem die Gleichspannung U12 auftritt.

Der ausgangsseitige Hauptstromkreis des Stromversorgungsgerätes 1 ist somit unmittelbar mit dem Ausgangsanschluß 22 und über die Entkopplungsdiode 17 mit dem Ausgangsanschluß 21 verbunden. Dabei liegt die Entkopplungsdiode 17 mit ihrer Kathode am Ausgangsanschluß 21.

Der Regler 9 ist ein handelsüblicher integrierter Schaltkreis, z.B. vom Typ TL 431 der Fa. Motorola. Ein derartiger Regler weist einen Bezugsspannungsanschluß 93, einen Istwerteingang 92 und einen Stellspannungsausgang 91 auf.

Der Regler 9 enthält eine Referenzspannungsquelle und gibt am Stellspannungsausgang 91 die Stellspannung U3 ab. Der Stellspannungsausgang 91 ist über den Widerstand 10 an den Pluspol der Gleichspannung U12 angeschlossen. Der Bezugspotentialanschluß 93 des Reglers 9 ist mit dem Massepotential M verbunden. Am Stellspannungsausgang 91 liegt die Basis des Transistors 7. Der Emitter des Transistors 7 ist über den Widerstand 6 an die Anode der Entkopplungsdiode 17 geführt. Der Kollektor des Transistors 7 ist über die lichtemittierende Diode 8 des Optokopplers 8, 31 an das Bezugspotential M gelegt.

Die Anordnung 20 zur Istwertbildung enthält den zwischen den Ausgangsanschlüssen 21 und 22 liegenden und aus den Widerständen 18 und 19 bestehenden Spannungsteiler, der den Abgriff a hat. Die Anordnung 20 zur Istwertbildung enthält zusätzlich zu dem ohmschen Spannungsteiler 18, 19 eine Anordnung mit den beiden komplementären Transistoren 11 und 15. Die Basis des Transistors 15 liegt am Abgriff a des Spannungsteilers 18, 19. Zwischen dem Emitter des Transistors 15 und der Anode der Diode 17 liegt der Widerstand 14, zwischen dem Kollektor des Transistors 15 und dem Bezugspotential M der Widerstand 16.

Die Basis des npn-Transistors 11 liegt unmittelbar am Emitter des pnp-Transistors 15, der Kollektor des Transistors 11 unmittelbar an der Anode der Diode 17. Zwischen dem Emitter des Transistors 11 und dem Bezugspotential M liegt die aus den Widerständen 12 und 13 bestehende Serienschaltung. Am Verbindungspunkt der Widerstände 12 und 13 liegt der Istwerteingang 92 des Reglers 9.

In drei Stromzweigen der aktiven Anordnung 20 zur Istwertbildung fließen die Ströme I1, I2, und I3.

Der erste Stromzweig, in dem der Strom I1 fließt, besteht aus dem ohmschen Widerstand 14. Der zweite Stromzweig, in dem der Strom I2 fließt, besteht aus der Kollektor-Emitterstrecke des Transistors 11 und den dazu in Serie liegenden Widerständen 12 und 13.

Der Strom I3 fließt vom Emitter des Transistors 7 über die lichtermittierende Diode 8 des Optokopplers 8, 31 zum Ausgangsanschluß 22.

Im ausgangsseitigen Hauptstromkreis des Stromversorgungsgerätes 1 fließt der Ausgangsstrom I4.

Die zum Minuspol 23 der Sammelschiene 25 führenden Strompfade der Hauptstormkreise der Stromversorgungsgeräte 1 und 2 enthalten jeweils keine Entkopplungsdiode. In den Strompfaden der ausgangsseitigen Hauptstromkreise, die zum Pluspol 24 der Sammelschiene 25 führen, liegt jeweils eine Entkopplungsdiode 17 bzw. 170. An der Sammelschiene 25 liegt eine relativ kleine Gleichspannung hoher Genauigkeit, z.B. eine Spannung von 5,0 V mit einer Toleranz von 2 %. Bei dieser Ausgangsspannung U2 handelt es sich um eine Spannung, die bezogen auf den an Bezugspotential liegenden Minuspol positiv ist.

Der Regler 9 ist ein dreipoliger integrierter Schaltkreis, der wie ein Operationsverstärker mit integrierter Referenzspannungsquelle mit einer Referenzspannung von z.B. 2,49 V hoher Stabilität funktioniert. Bezogen auf seinen Bezugspunkt verarbeitet er nur positive Meßwerte.

Bezugspunkt für die Regelschaltung ist Punkt M in der negativen Ausgangsleitung. Diesem Punkt ist das Spannungspotential 0 V zugeordnet. Der Ausgangsanschluß 21 erhalt positives Potential, z.B. + 5 V.

Am Abgriff a des ohmschen Spannungsteilers 18, 19 wird ein Teil der Ausgangsspannung U2 abgegriffen und der Basis des Transistors 15 zugeführt.

Der Istwert für den Regler 9 fällt als Spannungsabfall $I2 \cdot R13$ am Widerstand 13 ab. Dieser Wert wird von der Regeleinrichtung durch Verstellen der Spannung U12 so geregelt, daß er gleich der internen Referenz von z.B. 2,49 V wird.

Der aktive Istwertbilder 20 beeinflußt den Strom I2 so, daß die mittels der Diode 17 von der Spannung U12 entkoppelte Ausgangsspannung U2 unabhängig von der Spannung U7 wird, die an der Diode 17 abfällt.

Die Anordnung 20 zur Istwertbildung eliminiert bei optimaler Bemessung den Einfluß, den der an der Entkopplungsdiode 17 auftretende Spannungsabfall auf die konstant zu haltende Ausgangsspannung U2 haben könnte, völlig.

Aus der folgenden Rechnung geht hervor, daß die entkoppelte Ausgangsspannung U2 nur von der Referenz des Reglers 9 und einem Widerstandsverhältnis abhängt.

Der störende Spannungsabfall U7 wird völlig, die Basis-Emitter-Spannungen U5 und U6 der Transistoren 11 und 15 in erster Näherung eliminiert. Stimmen die Basis-Emitterspannungen U5 und U6 miteinander überein, so gilt

U5 = U6 und der störende Spannungsabfall U7 wird völlig eliminiert.

Die Bedingung U5 = U6 kann dadurch erreicht werden, daß für die Transistoren 11 und 15 komplimentär-gleiche Transistoren verwendet werden, z.B. Transistoren vom Typ BCW 66/68, die als SMD-Bausteine thermisch gut zu koppeln sind.

Die nachfolgende Schaltungsanalyse zeigt, daß die Ausgangsspannung U2 unabhängig von dem Spannungsabfall U7 der Entkopplungsdiode 17 ist.

In den Formeln ist

R12      der Wert des Widerstandes 12,
R13      der Wert des Widerstandes 13,
R14      der Wert des Widerstandes 14,
R18      der Wert des Widerstandes 18,
R19      der Wert des Widerstandes 19,
U2      die Ausgangsspannung,
U3      die Spannung am Stellspannungsausgang 91 des Reglers 9,
U4      die Referenzspannung des Reglers 9,
U5      die Spannung an der Basis-Emitterstrecke des Transistors 15,
U6      die Spannung an der Basis-Emitterstrecke des Transistors 11,
U7      die Spannung an der Entkopplungsdiode 17,

Aus der Struktur der Schaltungsanordnung ergibt sich

(1)

$$I1 = \frac{U2 + U7 - U5 - U2 \cdot k}{R14}$$

$$\text{mit } k = \frac{R19}{R18 + R19}$$

(2)

$$I2 = \frac{(U2 + U7) - I1 \cdot R14 - U6 - U4}{R12}$$

Durch entsprechende Bemessung wird
(3) R12 = R14 = R gewählt.

Eine Verwendung komplementär-gleicher Transistoren 11 und 15 ergibt:
(4) U5 = U6 = U. Ferner ist U8 = k • U2
(5)

$$I2 = \frac{(U2 + U7) - \frac{(U2 + U7) - U - U8}{R} \cdot R - U - U4}{R}$$

(6)

$$I2 = \frac{(U2+U7)-(U2+U7)+U+U8-U-U4}{R}$$

(7)

$$I2 = \frac{U2-U2+U8-U4}{R}$$

Der Regler 9 regelt die Ausgangsspannung U2 dadurch auf einen konstanten Wert, daß die Beziehung

$$U4 = U_{Ref}$$

erzielt wird.

(8)

$$U4 = I2 \cdot R13 = \frac{U8-U_{Ref}}{R} \cdot R13 = \frac{U8 \cdot R13}{R} - \frac{U_{Ref}}{R} \cdot R13$$

(9)

$$U4 + U4 \frac{R13}{R} = U8 \frac{R13}{R}$$

(10)

$$U4 \left(1+\frac{R13}{R}\right) = U8\frac{R13}{R} = U2 \cdot k \frac{R13}{R}$$

(11)

$$U2 = U4\left(1+\frac{R13}{R}\right)\frac{R}{R13} \cdot \frac{1}{k}$$

(12)

$$U2 = \frac{U4}{k} \cdot \left(\frac{R}{R13}+1\right)$$

Mit den Spannungswerten
U12 = 5,5V, $U_{Ref}$ = 2,5 V, U6 = 0,6 V, $U_{R2}$ = 1,2 V,
UR1 = 1,2 V, U5 = 0,6 V, U7 = 0,5 V
ergibt sich für U8 = 3,7 V,
somit für

$$k = \frac{3,7V}{5,0V} = 0,74 \quad \text{und}$$

$$\frac{R}{R13} = 0,48$$

bei $U_{Ref}$ = 2,5 V

Wie das Ergebnis (12) zeigt, fällt der Einfluß der Halbleiter 11, 15 und 17 auf die Ausgangsspannung U2 heraus. Die temperatur- und stromabhängige Störgröße U7 wird dabei ganz, die Störgrößen U5 und U6 in erster Näherung eliminiert.

Die für eine vollständige Kompensation vorausgesetzte Bedingung U5 = U6 wird insbesondere dadurch erreicht, daß als Transistoren 15 und 11 gleich-komplementäre Transistoren verwendet werden. Diese Transistoren werden vorzugsweise als SMD(Surface Mounted Device)-Bausteine thermisch eng gekoppelt.

Das Widerstandsverhältnis R18:R19 wird zweckmäßigerweise mit Rücksicht auf eine optimale Kollektor-Emitterspannung für den Transistor 15 gewählt.

Der untere Grenzwert der Ausgangsspannung U2 ergibt sich wegen U5 = U6 = ca. 0,6 V und Uce $\geq$ 0,6 V
zu $U2_{min} \geq$ 4,3 V;

Wird als Regler 9 ein Baustein mit einer Referenzspannung U3 = 1,2 V verwendet, so kann $U_{2min} \geq$ 3,0 V sein.

Ist die Diode 27 nicht vorhanden, so ergibt sich der obere Grenzwert der Ausgangsspannung U2 wegen der maximal zulässigen Basis-Emitter-Sperrspannung des Transistors 15

$$U_{BE} \leq 5 \text{ V}$$

zu $U_{2max} \leq$ 6,8 V.

Liegt zwischen der Anode der Diode 17 und dem Abgriff a des Spannungsteilers 18, 19 die Diode 27, so kann $U_{2max} \leq$ 15 V sein.

Bei einem bevorzugten Bemessungsbeispiel sind die Transistoren 15 und 11 vom Typ BCW 66/68. Das Widerstandsverhältnis R18:R19 ist so gewählt, daß die Spannung U8 am Abgriff a des Spannungsteilers 18, 19 den Wert 1,8 V hat. Das Teilerverhältnis k beträgt daher k = 0,38.

Hieraus ergibt sich als Maximalwert der Basisspannung U8

$$U_{8max} = (0,6V + 5V) / (1-0,38) = 9 \text{ V}$$

Mit Hilfe der Schaltungsanordnung läßt sich insbesondere in Anlagen der Kommunikationstechnik die Betriebssicherheit der Systeme dadurch erhohen, daß zwei oder mehrere Stromversorgungsgeräte parallel betrieben werden. Dabei werden die das System zwecks Redundanz speisenden Ausgangskreise der Stromversorgungsgerate über Entkopplungdioden an eine gemeinsame Sammelschiene gelegt. Obwohl für die Spannung an dieser Sammelschiene bei kleinem Absolutwert, z.B. 4,8 V eine hohe Genauigkeit bzw. kleine Toleranz von z.B. ± 2 % gefordert wird und dazu der Laststrombereich relativ groß ist, z.B. von 0 bis 8 A reicht, kann eines der beiden Stromversorgungsgeräte das andere jeweils praktisch unverzögert ablösen.

Das zuerst angeschaltete Gerät, z.B. das Gerät 2, bestimmt die an der Sammelschiene 25 liegende Spannung. Der vom ohmschen Spannungsteiler 18, 19 gelieferte Meßwert liegt jedoch aufgrund der Sperrwirkung der Kollektor-Basis- bzw. Emitter-Basisstrecke des Transistors 11 nicht am Eingang des Reglers 9 des noch nicht eingeschalteten Gerätes 1. Beim Zuschalten des Gerätes 1 entsteht kein Problem. Dem Regler 9 wird nicht sofort der von der Spannung U2 kommende Istwert angeboten.

Erst wenn die Spannung U12 in die Nähe ihres Nennwertes gekommen ist, kann die Vorrichtung 20 zur Istwertbildung arbeiten.

Das Stromversorgungsgerät 1 kann anlaufen und die geforderte Ausgangsspannung U2 erzeugen. Das Gerät 1 kann daher ohne weiteres den richtigen Betriebszustand erreichen.

Die Schaltungsanordnung ist besonders zur redundanten Speisung von Einrichtungen der elektrischen Nachrichtenübertragungstechnik geeignet.

**Patentansprüche**

1.  Schaltungsanordnung (1) zur Erzeugung einer auf einen konstanten Wert geregelten Gleichspannung (U2), mit zwei Ausgangsanschlüssen (21, 22), an die ein elektrischer Verbraucher (26) und/oder der Ausgang wenigstens einer weiteren gleichartigen Schaltungsanordnung (2) anschließbar ist, wobei die Schaltungsanordnung (1), die mit dem einen der beiden Ausgangsanschlüssen (22) an einem Bezugspotential (M) liegt, in dem zum weiteren Ausgangsanschluß (21) führenden Strompfad eine Entkopplungsdiode (17) aufweist, einen Regler (9) enthält, der an eine Anordnung (20) zur Istwertbildung angeschlossen ist, wobei die Anordnung (20) zur Istwertbildung einen ersten Transistor (15) enthält, dessen Basis an den Abgriff (a) eines zwischen den Ausgangsanschlüssen (21, 22) liegenden ohmschen Spannungsteilers (18, 19) angeschlossen und dessen Emitter über einen Widerstand (14) mit der Entkopplungsdiode (17) verbunden ist, und der Regler (9), der einen Bezugsspannungsanschluß (93), einen Istwertspannungseingang (92) und einen Stellspannngsanschluß (91) aufweist, Abweichungen der von der Anordnung (20) zur Istwertbildung abgegebenen Istwertspannung (U4) von einer Referenzspannung wenigstens näherungsweise eliminiert,
    **dadurch gekennzeichnet,**
    daß der Emitter des ersten Transistors (15) an die Basis eines zweiten Transistors (11) geführt ist, dessen Kollektor mit der Entkopplungsdiode (17) verbunden ist, und daß der erste Transistor (15) und der zweite Transistor (11) vom einander entgegegesetzten Leitfähigkeitstyp sind, und daß zwischen dem Istwertspannungseingang (92) des Reglers (9) und der Entkopplungsdiode (17) eine Serienschaltung aus einem Widerstand (12) und der Emitter-Kollektorstrecke des zweiten Transistors (11) und zwischen dem Istwertspannungseingang (92) des Reglers (9) und dem am Bezugspotential (M) liegenden Ausgangsanschluß (22) ein Widerstand (13) liegt und daß der Stellspannungsausgang (91) des Reglers (9) über einen Wider stand (10) mit der Entkopplungsdiode (17) verbunden ist.

2.  Schaltungsanordnung nach Anspruch 1,
    **dadurch gekennzeichnet,**
    daß der erste Transistor (15) und der zweite Transistor (11) komplementär-gleiche Transistoren sind.

3.  Schaltungsanordnung nach Anspruch 1 oder 2,
    **dadurch gekennzeichnet,**
    daß der erste Transistor (15) und der zweite Transistor (11) thermisch eng gekoppelt sind.

4.  Schaltungsanordnung nach Anspruch 3,
    **dadurch gekennzeichnet,**
    daß am Ausgangsanschluß (91) des Reglers (9) die Basis eines dritten Transistors (7) liegt, in dessen Kollektorzuführung die lichtemittierende Diode (8) eines Optokopplers (2, 8) angeordnet ist.